# EUROPEAN PATENT SPECIFICATION

(11) **EP 2 870 880 B1**
(45) Date of publication and mention of the grant of the patent: **14.09.2016**
(21) Application number: 14192366.4
(22) Date of filing: 07.11.2014
(51) Int. Cl.: A22C 15/00

(54) **Device for loading hams on storage frames and unloading the hams therefrom**
Vorrichtung zum Laden von Schinken auf Lagerrahmen und zum Entladen der Schinken davon
Dispositif de chargement de jambons sur des trames de stockage et de déchargement des jambons à partir de ceux-ci

(30) Priority: 12.11.2013 IT MO20130312
(43) Date of publication of application: 13.05.2015
(73) Proprietor: VE.MA.C. Societa' A Responsabilita' Limitata, 41051 Castelnuovo Rangone (MO) (IT)
(72) Inventor: Costantini Maurizio, 41057 Spilamberto (MO) (IT); Vezzali, Franco, 41057 Spilamberto (MO) (IT); Malagoli, Uliano, 41041 Formigine (MO) (IT)
(74) Representative: Crugnola, Pietro

(56) References cited:
- EP-A1- 0 127 714
- US-A- 3 982 300
- US-A- 5 453 046
- US-A1- 2009 011 695

## Description

The present invention relates to a device for loading hams on storage frames and unloading the hams therefrom.

The storage frames are provided with fixed or movable transverse supporting bars, provided with hooks on which the hams are suspended by laces fixed to the hams.

Positioning the hams on the aforesaid supporting bars or removing therefrom are performed manually. The hams are normally positioned on the bar in two staggered rows on opposite sides of the bar.

To reduce the overall height dimensions of the storage frames, the aforesaid supporting bars are generally spaced vertically apart so that the hams suspended on a bar at least partially overlap the hams suspended on the bar below.

In the case of frames of large dimensions, the supporting bars are generally removable.

Positioning the hams on the bars or removing the hams from the bars does not occur with the bars positioned on the frame, inasmuch as it would be difficult to position the hams on bars that are at a significant height from the ground or remove the hams from the bars. In this case, the bars are removed from the frame and repositioned thereupon after the hams have been positioned on the bars or removed from the bars.

From the prior art, devices are known for transferring onto a storage frame or removing therefrom bars on which food products are suspended, such as, for example, salamis or sausages. Devices of this type are disclosed, for example in US2009011695 and EP2305044.

When positioning or removing bars in a storage frame with the hams suspended on the bars, there is the problem that the hams suspended on the bar, owing to the reduced vertical distance between the bars, can easily interfere with the hams suspended on another bar, making it difficult to insert a bar on the frame, or remove a bar from the frame.

The present invention proposes to provide a device for loading hams onto a storage frame, or unloading the hams therefrom that avoids the hams suspended on a supporting bar of a storage frame being able to interfere with the hams suspended on another supporting bar, during the operations of fitting the bar on the frame or removing the bar from the frame.

The object of the present invention is achieved with a device for loading hams onto a storage frame and unloading the hams therefrom according to claim 1.

Owing to the invention, the operations of loading and unloading the hams in storage frames are easier and require considerably less time.

The invention will now be disclosed in detail below, with reference to the attached drawings, which illustrate an example thereof by way of non-limiting example, in which:
Figure 1 is a raised view of a frame for storing hams, with a plurality of hams arranged thereupon;
Figure 2 is a view from the left of the frame in Figure 1;
Figure 3 is a top view of the frame in Figure 1;
Figure 4 is a top view of a device according to the invention for loading hams onto a frame like that of Figures 1 to 3;
Figure 5 is a top view of the device in Figure 4 onto which a supporting bar of hams has been loaded on which a plurality of hams has been suspended to be placed on a frame like that of Figures 1 to 3;
Figure 6 is a view like that of Figure 5 that illustrates a different arrangement of hams on the supporting bar;
Figure 7 is a raised view of a device according to the invention, in a first operating position;
Figure 8 is a view like that of Figure 7, with the device according to the invention in a second operating position;
Figure 9 is an enlarged detail of the device according to the invention.

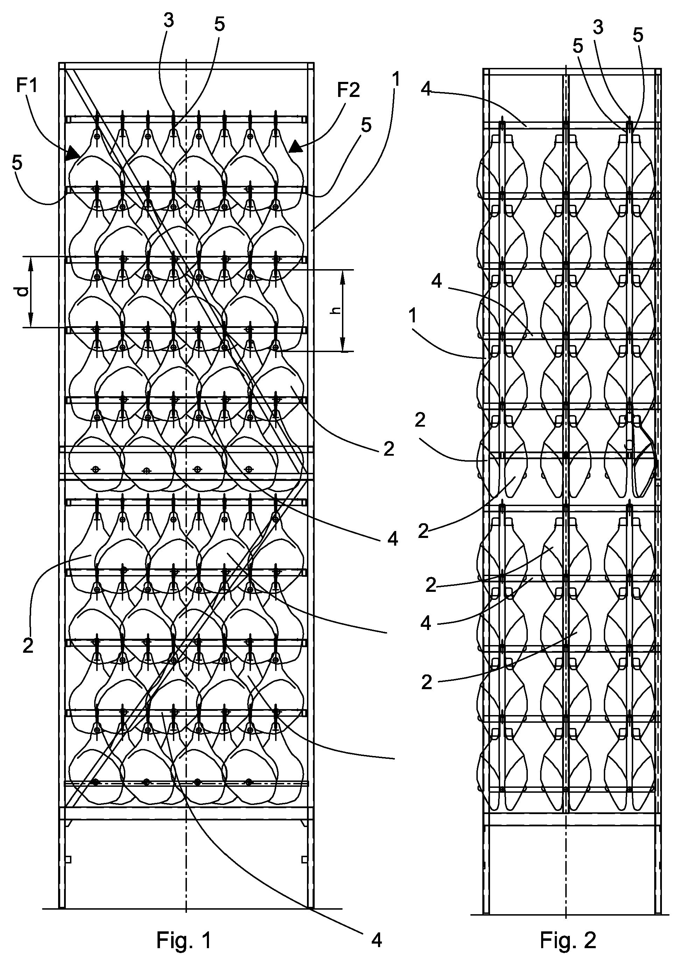

In Figures 1 to 3 a frame 1 for storing hams 2 is illustrated. The hams 2 are inserted in the frame 1 by being suspended on suitable hooks 3 with which the removable supporting bars 4 are provided resting on respective pairs of supports 5 with which the frame 1 is provided. The hams are suspended on the hooks 3 by laces 29 fixed to the hams 2.

The hams are arranged on each supporting bar 4 in two rows, F1, F2, which are staggered between one another and arranged on opposite sides of the supporting bar 4.

As can be seen in Figure 1, the vertical distance d between two supporting bars 4 is less than the average height h of the hams 2. This means that the hams suspended on a supporting bar 4 partially overlap the hams suspended on another supporting bar 4 immediately below.

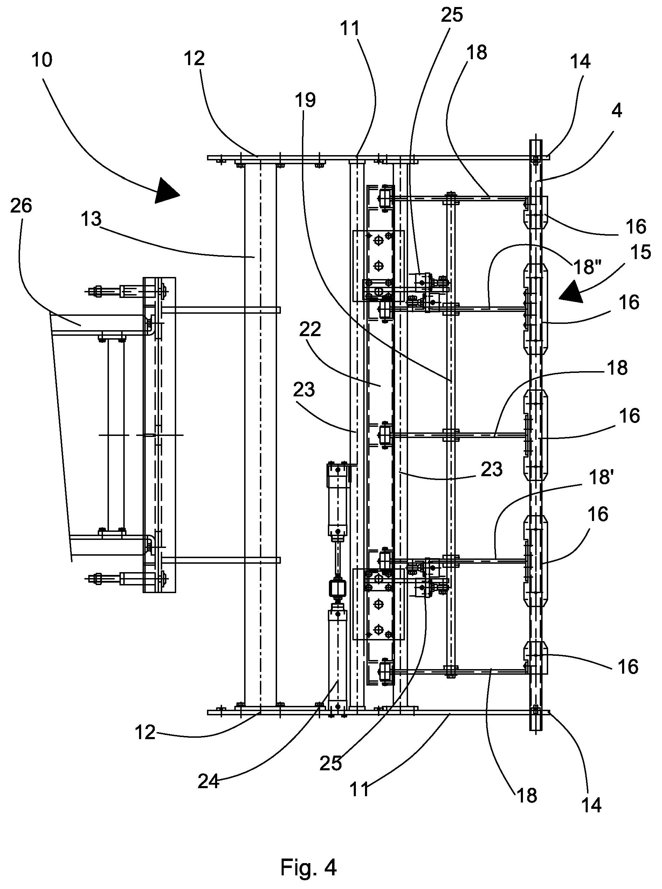

In Figure 4 a device 10 according to the invention is illustrated by means of which it is possible to place the supporting bars 4 on the frame 1, or remove the supporting bars 4 therefrom.

The device 10 comprises a pair of arms 11, connected to a first end 12 thereof by a crosspiece 13. A second end 14 of the arms 11, opposite the first end 12, is intended to support the supporting bars 4 during the operations of inserting on the frame 1 or removing from the frame 1.

The supporting bars 4 can, for example, be made of U-shaped profiled section bars. In this case, the second end of each arm 14 can be provided with a protrusion 27 suitable for being inserted inside the U-shaped section of a supporting bar 4, to ensure a stable rest of the supporting bar 4 on the arms 11.

The device 10 is further provided with spacer means 15 that is used to space apart from one another the two rows F1, F2 of hams 2 suspended on a supporting bar 4, to prevent them interfering with the hams suspended on another supporting bar 4 immediately below, during the operation of fitting the supporting bar 4 on the frame 1, or during the operation of removing the supporting bar 4 from the frame 1.

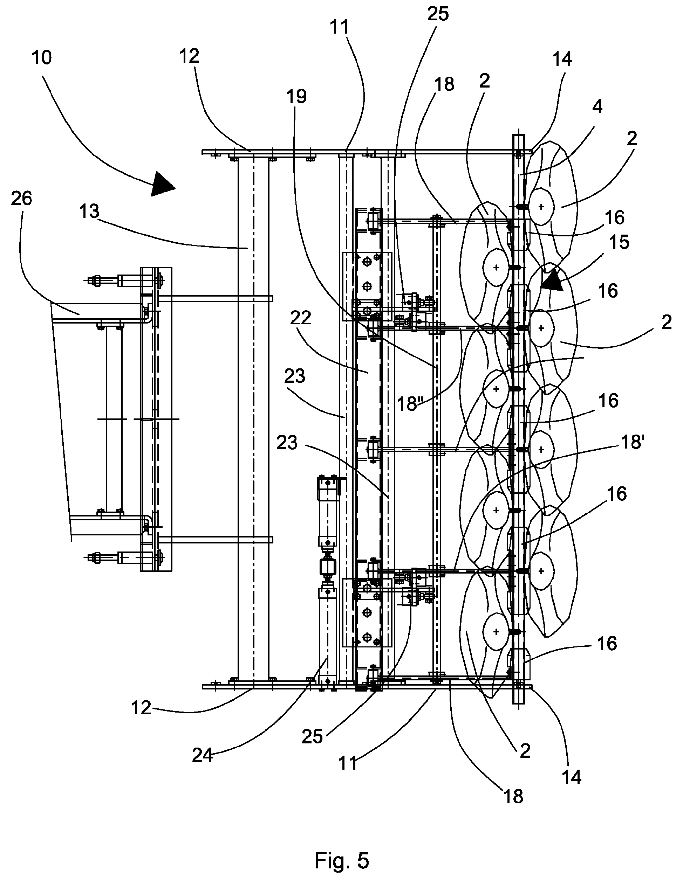

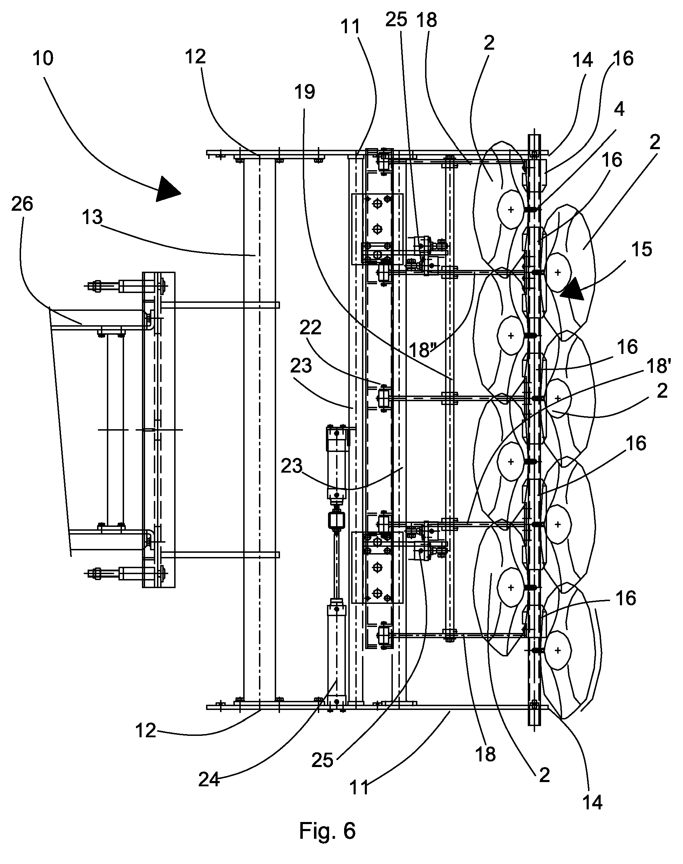

The spacer means 15 comprises a plurality of spacer elements 16, each of which is fixed to a first end 17 of a respective supporting arm 18. The supporting arms 18 are connected together by a transverse rod 19. A second end 20 of each supporting arm 18 is hinged on a respective fulcrum 21 on a supporting element 22, that can be slid, by driving means 24, on transverse guides 23 fixed to the arms 11, said driving means 24 being able to comprise, for example, a pneumatic or hydraulic operating cylinder. The supporting element 22 is slid to position the spacer elements 16 according to the position of the hams 2 on the supporting bar 4. Two different arrangements of the hams 2 on a supporting bar 4 are visible in Figures 5 and 6, in which also the different positioning of the spacer elements 16 at the different arrangement of the hams 2 can be seen.

The supporting arms 18 can be rotated around the respective fulcrums 21 by further driving means 25 comprising, for example, a pair of further hydraulic or pneumatic operating cylinders, which act on two supporting arms 18' and 18". As the supporting arms 18 are all connected together by the transverse rod 19, a rotation of the supporting arms 18', 18" involves a similar rotation of the remaining supporting arms 18.

The device 10 can be fixed to a robotic arm 26 that moves the device 10 for operations of loading the supporting bars 4 onto a frame 1 and for the corresponding operations of removing the supporting bars 4 from a frame 1.

Below, the operation of the device 10 according to the invention is disclosed.

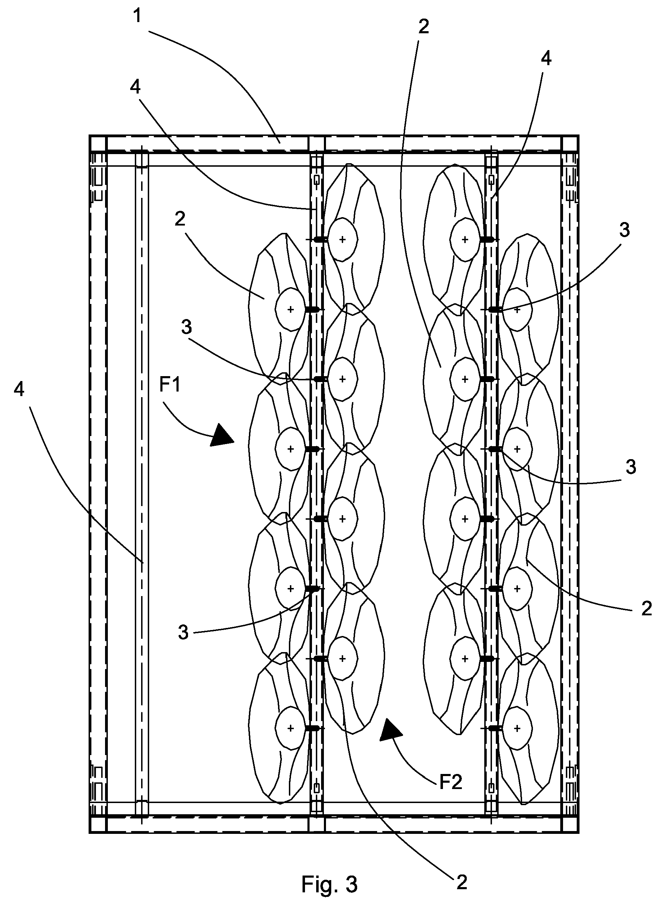

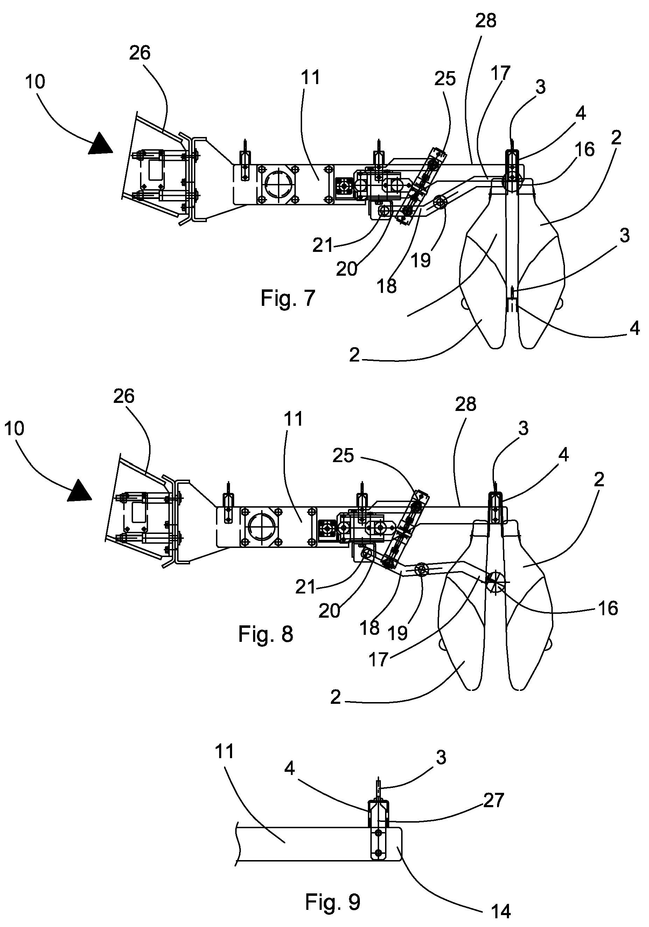

The hams 2 are loaded manually onto the supporting bars 4, by suspending the hams 2 on the hooks 3 by the laces 29 fixed to the hams 2. On each supporting bar 4 two rows F1, F2 of hams are arranged placed on opposite sides with respect to the supporting bar 4 and staggered in relation to one another, as can be seen, for example, in Figures 1 and 3. When a supporting bar 4 has been completed, it is sent to a removal zone, where it is removed by the device 10 according to the invention, which is handled by the robotic arm 26, so that the ends 14 of the arms 11 move below the supporting bar 4 and the protrusions 27 are inserted inside the U-section of the supporting bar 4 and the supporting bar 4 rests on the upper face 28 of the arms 11. The spacer elements 16 are in this step positioned as illustrated in Figures 7, between the arms 11 at a level below the upper face 28 of the arms 11, so as not to interfere with a supporting bar 4 resting on the arms 11.

The robotic arm 26 thus carries the device 10 with the supporting bar 4 loaded with hams 2 to a storage frame 1 and introduces the device 10 inside the frame 1 by positioning the supporting bar 4 above a pair of supports 5 of the frame 1. Before the supporting bar 4 is rested on the supports 5, the supporting arms 18 that carry the spacer elements 5 are driven by the further driving means 25 and rotate downwards around the respective fulcrums 21, so as to take the spacer elements 16 between the two rows F1, F2 of hams 2, spacing the hams apart from one another, as illustrated in Figure 8. When the supporting bar 4 is rested on the supporting elements 5, the two rows F1, F2 of hams 2 can overlap the rows of hams 2 of a supporting bar 4 immediately beneath, without interfering therewith.

After the supporting bar 4 has been deposited on the supporting elements 5, the supporting arms 18 are rotated upwards, until they reach the position illustrated in Figure 7.

Lastly, the robotic arm 26 releases the arms 11 from the supporting bar 4 by moving the device 10 downwards and lastly extracts the device 10 from the frame 1, returning the device 10 to the removing zone to remove another supporting bar 4.

To remove a supporting bar 4 from a storage frame 1, the device 10 is inserted into the frame, taking the arms 11 below the supporting bar 4 to be removed, then moves upwards until the protrusions 27 of the arms 11 are inserted into the U-shaped section of the supporting bar 4 and the latter rests on the upper faces 28 of the arms 11. The supporting arms 18 then rotate downwards, to insert the spacer elements 16 between the two rows F1, F2 of hams 2 suspended on the supporting bar 4, to space said rows apart from one another, so that the hams 2 suspended on the supporting bar 4 do not slide on the hams suspended on another supporting bar immediately below during operations of extraction of the supporting bar 4 from the frame 1. Lastly, the device 10 moves further upwards, lifting the supporting bar 4 from the supporting elements 5 and the device 10 is extracted with the supporting bar 4 from the frame 1.

Owing to the device 10 according to the invention it is possible to insert supporting bars 4 with the hams 2 suspended in the storage frames 1 and to extract the supporting bars 4 from the storage frames 1 simply and rapidly without the risk that hams may unhook from the supporting bar due to interference with hams suspended on another supporting bar of the frame.

## Claims

1. Device (10) for loading hams (2) on storage frames (1) and unloading the hams therefrom, said storage frames (1) being provided with removable supporting bars (4) provided with hooking means (3) to which the hams (2) can be suspended, said device (10) comprising gripping means (11; 27) suitable for engaging in said removable supporting bars (4), **characterised in that** it further comprises spacer means (15) suitable for spacing apart from one another two rows (F1; F2) of hams (2) hanging on opposite sides of a removable supporting bar (4).

2. Device (10) according to claim 1, wherein said gripping means comprises a pair of arms (11) that are parallel to one another, connected to a first end (12) thereof by a crosspiece (13), each of said arms (11) being provided at a second end (14) opposite said first end (12) with a protrusion (27) suitable for engaging in said removable supporting bars (4).

3. Device (10) according to claim 1, or 2, wherein said spacer means (15) comprises a plurality of supporting arms (18) to a first end (17) of each of which a spacer element (16) is fixed.

4. Device (10) according to claim 3, wherein said supporting arms are connected to one another by a transverse rod (19).

5. Device (10) according to claim 3, or 4, as appended to claim 2, wherein a second end (20) of each supporting arm (18) is hinged on a fulcrum (21) located on a supporting element (22), that can be slid on transverse guides (23), fixed to said arms (11).

6. Device (10) according to claim 5, wherein said supporting element (22) is drivable to slide on said transverse guides (23) by driving means (24).

7. Device (10) according to claim 5, or 6, wherein a pair of supporting arms (18'; 18") is connected to further driving means (25) suitable for rotating said supporting arms (18) around respective fulcrums (21).

8. Device (10) according to any preceding claim, **characterised in that** it is fixable to a robotic arm (26).

## Patentansprüche

1. Vorrichtung (10) zum Beladen von Schinken (2) auf Lagerrahmen (1) und Entladen der Schinken von diesen, wobei die Lagerrahmen (1) mit abnehmbaren Tragstangen (4) versehen sind, die mit Hakenmitteln (3) versehen sind, an denen die Schinken (2) aufgehängt werden können, wobei die Vorrichtung (10) Greifmittel (11; 27) aufweist, die zum Eingreifen in die abnehmbaren Tragstangen (4) geeignet sind, **dadurch gekennzeichnet, dass** sie weiterhin Beabstandungsmittel (15) aufweist, die zum voneinander Beabstanden zweier Reihen (F1; F2) von Schinken (2) geeignet sind, die auf gegenüberliegenden Seiten einer abnehmbaren Tragstange (4) hängen.

2. Vorrichtung (10) nach Anspruch 1, wobei die Greifmittel ein Paar Arme (11) aufweisen, die parallel zueinander sind, die mit einem ersten Ende (12) derselben durch ein Querstück (13) verbunden sind, wobei jeder der Arme (11) an einem zweiten Ende (14), das dem ersten Ende (12) entgegengesetzt ist, mit einem Vorsprung (27) versehen ist, der zum Eingreifen in die abnehmbaren Tragstangen (4) geeignet ist.

3. Vorrichtung (10) nach Anspruch 1 oder 2, wobei die Beabstandungsmittel (15) eine Mehrzahl von Tragarmen (18) aufweisen, wobei an einem ersten Ende (17) jedes derselben ein Beabstandungselement (16) festgelegt ist.

4. Vorrichtung (10) nach Anspruch 3, wobei die Tragarme miteinander durch einen Querstab (19) verbunden sind.

5. Vorrichtung (10) nach Anspruch 3 oder 4, soweit von Anspruch 2 abhängig, wobei ein zweites Ende (20) jedes Tragarmes (18) an einem Drehpunkt (21) drehbar angebracht ist, der sich an einem Tragelement (22) befindet, der auf Querführungen (23) verschoben werden kann, die an den Armen (11) befestigt sind.

6. Vorrichtung (10) nach Anspruch 5, wobei das Tragelement (22) durch Antriebsmittel (24) antreibbar ist, um sich an den Querführungen (23) zu verschieben.

7. Vorrichtung (10) nach Anspruch 5 oder 6, wobei ein Paar Tragarme (18', 18") mit weiteren Antriebsmitteln (25) verbunden ist, die zum Drehen der Tragarme (18) um jeweilige Drehpunkte (21) geeignet sind.

8. Vorrichtung (10) nach irgendeinem vorhergehenden Anspruch, **dadurch gekennzeichnet, dass** sie an einem Roboterarm (26) befestigbar ist.

## Revendications

1. Dispositif (10) pour le chargement de jambons (2) sur des cadres de stockage (1) et le déchargement des jambons de ceux-ci, lesdits cadres de stockage (1) étant pourvus de barres porteuses amovibles (4) pourvues de moyens d'accrochage (3) auxquels les jambons (2) peuvent être suspendus, ledit dispositif (10) comprenant des moyens de préhension (11 ; 27) aptes à s'engager dans lesdites barres porteuses amovibles (4), **caractérisé en ce qu'**il comprend en outre des moyens d'écartement (15) aptes à écarter l'une de l'autre deux rangées (F1 ; F2) de jambons (2) suspendues sur des côtés opposés d'une barre porteuse amovible (4).

2. Dispositif (10) selon la revendication 1, dans lequel lesdits moyens de préhension comprennent une paire de bras (11) qui sont parallèles entre eux, reliés à une première extrémité (12) de celui-ci par une traverse (13), chacun desdits bras (11) étant pourvu à une seconde extrémité (14) à l'opposé de ladite première extrémité (12) d'une protubérance (27) apte à s'engager dans lesdites barres porteuses amovibles (4).

3. Dispositif (10) selon la revendication 1, ou 2, dans lequel lesdits moyens d'écartement (15) comprennent une pluralité de bras porteurs (18) dont pour chacun d'entre eux à une première extrémité (17) un élément d'écartement (16) est fixé.

4. Dispositif (10) selon la revendication 3, dans lequel lesdits bras porteurs sont reliés l'un à l'autre par une tige transversale (19).

5. Dispositif (10) selon la revendication 3, ou 4, lorsqu'elle dépend de la revendication 2, dans lequel une seconde extrémité (20) de chaque bras porteur (18) est montée articulée sur un pivot (21) situé sur un élément de support (22), qui peut coulisser sur des guides transversaux (23), fixés auxdits bras (11).

6. Dispositif (10) selon la revendication 5, dans lequel ledit élément de support (22) peut être entraîné pour coulisser sur lesdits guides transversaux (23) par des moyens d'entraînement (24).

7. Dispositif (10) selon la revendication 5, ou 6, dans lequel une paire de bras porteurs (18' ; 18") sont reliés à d'autres moyens d'entraînement (25) aptes à faire tourner en rotation lesdits bras porteurs (18) autour de pivots respectifs (21).

8. Dispositif (10) selon l'une quelconque des revendications précédentes, **caractérisé en ce qu'**il peut être fixé à un bras robotisé (26).
